# FASCICULE DE BREVET EUROPEEN

(11) **EP 1 818 652 B1**
(45) Date de publication et mention de la délivrance du brevet: **13.04.2016**
(21) Numéro de dépôt: 07290142.4
(22) Date de dépôt: 02.02.2007
(51) Int. Cl.: G01D 5/14, F16H 59/70

(54) **Detection en continu de la position d'un element mobile dans un systeme de changement de rapport de transmission**
Dauererfassung der Position eines mobilen Elements in einem System zum Ändern des Übertragungsverhältnisses
Continuous detection of the position of a mobile element in a system for changing the transmission ratio

(30) Priorité: 14.02.2006 FR 0601291
(43) Date de publication de la demande: 15.08.2007
(73) Titulaire: Kongsberg Driveline Systems SAS, 74300 Cluses (FR)
(72) Inventeur: Hodin, Guillaume, 74300 Cluses (FR); Rosson, Stéphane, 74460 Marnaz (FR); Baz, Jean-Pierre, 74190 Passy (FR)
(74) Mandataire: Ramey, Daniel

(56) Documents cités:
- EP-A- 0 800 055
- WO-A-02/43045
- WO-A-03/008911
- US-A- 6 057 682
- US-A1- 2002 167 306
- US-B1- 6 288 533
- US-B1- 6 326 782
- Philips: "DATA SHEET KMZ51 MAgnetic Field Sensor Product Specification", , 13 June 2000 (2000-06-13), Retrieved from the Internet: URL:http://www.datasheetcatalog.org/datash eet/philips/KMZ51_3.pdf [retrieved on 2011-04-19]

## Description

L'invention concerne un dispositif de détection en continu de la position linéaire et angulaire d'un élément mobile dans un système de changement de rapport de transmission, en particulier pour véhicule automobile.

On connaît des dispositifs capables de détecter la présence d'un élément mobile d'un système de changement de vitesse dans l'une ou l'autre de ses positions prédéterminées correspondant à une sélection et à un passage de vitesse, par exemple dans les systèmes du type «clutch by wire» où un embrayage est commandé par un actionneur piloté par des moyens de traitement de l'information à partir de la détection des positions dans lesquelles un levier de changement de vitesse est déplacé par le conducteur du véhicule.

Ces dispositifs connus ne sont pas toutefois capables, en général, de détecter en continu le rapport de transmission qui est engagé dans la boîte de vitesses du véhicule, alors que cette information peut être exploitée utilement à diverses fins par des moyens de traitement informatique, par exemple pour réduire la consommation de carburant et/ou l'émission de composés polluants dans l'atmosphère ou encore pour empêcher le démarrage du moteur quand une vitesse est engagée.

Il est important par ailleurs que cette information puisse être obtenue avec un nombre minimal de composants de détection et de façon aussi peu coûteuse que possible.

Le document US-A-6057682 décrit un dispositif utilisant des capteurs à effet Hall pour déterminer la position en translation et la position angulaire d'un élément mobile, ces deux positions étant déterminées indépendamment l'une de l'autre.

Le document WO02/43045A1 décrit un dispositif utilisant trois groupes de deux capteurs d'intensité de champ magnétique pour détecter la position d'un élément mobile dans un plan, et trois groupes de trois capteurs pour déterminer la position de cet élément dans un espace à trois dimensions.

L'invention propose un dispositif de détection en continu de la position linéaire et angulaire d'un élément mobile dans un système de changement de rapport de transmission, en particulier pour véhicule automobile, caractérisé en ce qu'il comprend au moins un aimant permanent monté sur l'élément mobile et au moins un circuit imprimé portant des cellules à magnétorésistances, monté sur un support fixe en regard de la trajectoire parcourue par l'aimant permanent lors du déplacement de l'élément mobile en translation et en rotation pour un changement de rapport de transmission, les sorties desdites cellules étant reliées à un circuit de traitement pour déterminer par triangulation la position de l'élément mobile à partir des directions des lignes de champ magnétique détectées par les cellules.

Il suffit donc, selon l'invention, de monter un aimant permanent sur un élément mobile dans un système de changement de vitesse et de disposer sur un support fixe un circuit imprimé portant des cellules à magnétorésistances en regard de la trajectoire de l'aimant permanent, pour être renseigné en continu sur la position de l'élément mobile, et cela de façon fiable grâce à l'utilisation des cellules à magnétorésistances qui permettent une détection précise de la position de l'élément mobile sans contact avec celui-ci.

Avantageusement, les cellules à magnétorésistances sont montées sur un même circuit imprimé.

Ce circuit peut comporter au moins trois cellules à magnétorésistances et de préférence quatre cellules disposées par exemple aux coins d'un carré ou d'un rectangle pour détecter de façon fiable la position de l'aimant permanent et bénéficier d'une redondance d'information améliorant la fiabilité de l'information détectée.

Lorsque la course de l'aimant permanent est relativement importante, le circuit imprimé peut porter davantage de cellules et par exemple cinq cellules disposées en croix.

Dans un mode de réalisation préféré de l'invention, l'élément mobile du système de changement de rapport de transmission est un doigt de passage monté dans un module de sortie d'une boîte de vitesses.

Dans un autre mode de réalisation, l'élément mobile est le levier de changement de vitesse.

Dans une variante de réalisation de l'invention, le dispositif comprend deux aimants permanents qui sont portés par l'élément mobile et qui sont séparés l'un de l'autre par un blindage magnétique, les axes magnétiques de ces aimants étant perpendiculaires, le dispositif comprenant encore deux circuits imprimés perpendiculaires portant des cellules à magnétorésistances qui sont réparties le long des trajectoires parcourues par les deux aimants quand l'élément mobile est déplacé en rotation et en translation pour un changement de rapport de transmission.

Le blindage magnétique précité qui sépare les deux aimants s'étend entre chaque aimant et les cellules à magnétorésistances destinées à la détection de la position de l'autre des aimants.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
La figure 1 représente schématiquement un doigt de passage d'une boîte de vitesses pour véhicule automobile, équipé d'un aimant permanent ;
La figure 2 est un schéma de principe du dispositif selon l'invention ;
La figure 3 illustre la détermination de la position de l'aimant par triangulation ;
La figure 4 représente schématiquement une variante de réalisation de l'invention.

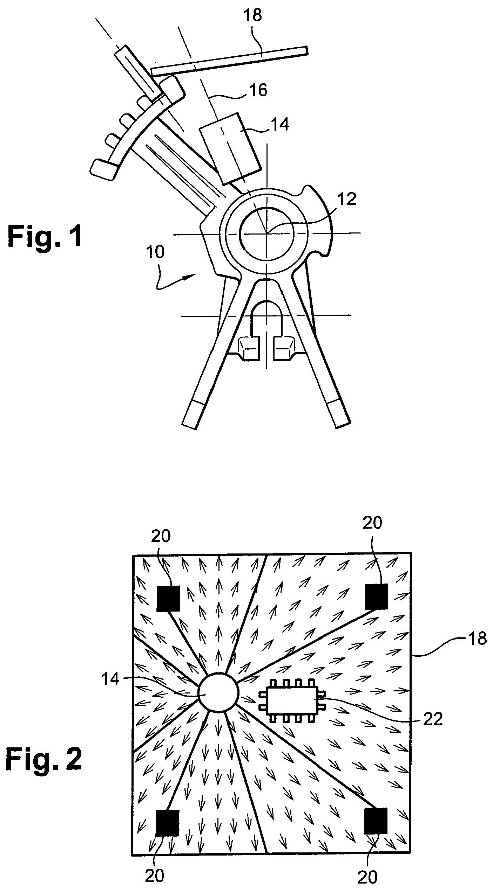

De façon bien connue de l'homme du métier un doigt de passage dans une boîte de vitesses, tel que celui représenté en 10 en figure 1, fait partie d'une tringlerie de sélection et de passage de vitesse et est destiné à déplacer des fourchettes d'entraînement des synchroniseurs équipant les moyens de crabotage de la boîte de vitesses, le doigt de passage étant déplaçable en rotation autour de son axe 12 et en translation le long de cet axe pour la mise en action de l'une ou de l'autre des fourchettes d'engagement des vitesses.

Selon l'invention, ce doigt de passage porte un aimant permanent 14 qui est ici de forme cylindrique et dont l'axe magnétique 16 est orienté radialement par rapport au doigt de passage 10, c'est-à-dire passe par l'axe 12 de rotation de ce doigt de passage.

L'aimant permanent 14 porté par le doigt de passage se déplace en regard d'une plaquette 18 de circuit imprimé qui est portée par un support fixe, par exemple par le boîtier du module de sortie de la boîte de vitesses dans lequel est monté le doigt de passage 10, cette plaquette de circuit imprimé 18 portant des cellules 20 à magnétorésistances dont les sorties sont reliées aux entrées d'un microprocesseur 22 qui est monté sur la plaquette 18 de circuit imprimé dans l'exemple de la figure 2 mais qui, en variante, pourrait être éloigné et constitué par le microprocesseur du calculateur de commande de la boîte de vitesses.

Les cellules 20 sont au nombre de trois au minimum pour détecter par triangulation la position de l'aimant permanent 14 quand il est déplacé par rapport à la surface de la plaquette 18 de circuit imprimé, qui est orientée sensiblement perpendiculairement à l'axe magnétique de l'aimant permanent.

De façon connue, chaque cellule 20 à magnétorésistances comprend un circuit électrique formé de quatre résistances montées en pont, dont deux bornes opposées sont raccordées à des moyens d'alimentation électrique en courant continu, le signal de sortie étant prélevé sur les deux autres bornes du pont et correspondant à une différence de potentiel.

Les quatre résistances sont réalisées en un alliage conducteur dont la résistance électrique est variable en présence d'un champ magnétique. A partir d'un seuil de saturation du champ magnétique, la variation de la valeur de chaque résistance électrique dépend directement de l'angle entre la direction de passage du courant électrique dans la résistance et la direction de l'excitation magnétique.

Ces cellules à magnétorésistances présentent un certain nombre d'avantages, tels que l'insensibilité aux coefficients de température des aimants permanents, aux dispersions des caractéristiques des aimants, aux chocs et aux vibrations, aux variations de température ambiante, l'acceptation de tolérances mécaniques relativement élevées, l'utilisation d'aimants à faible coût et une mesure directe de l'angle de déplacement de l'aimant permanent.

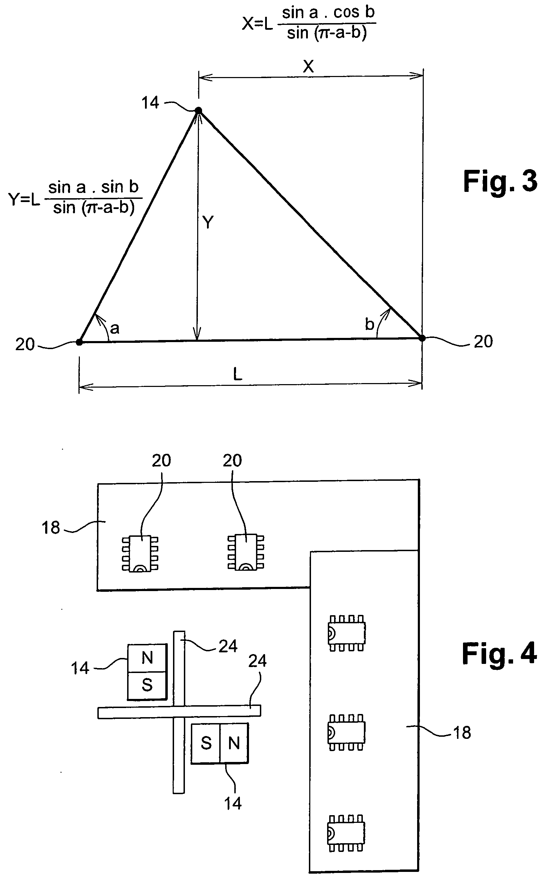

La figure 3 illustre le principe de la détermination de la position de l'aimant permanent 14 par triangulation au moyen de deux cellules 20 à magnétorésistances. Les positions de ces cellules 20 sont connues et leurs signaux de sortie sont des mesures des angles a, b, formés par la direction de l'excitation magnétique de l'aimant permanent 14 avec un axe de référence passant par les emplacements des cellules.

La connaissance des angles a, b, et de la position des cellules 20 permet de déterminer les coordonnées de l'aimant permanent 14 dans le plan de la plaquette 18 de circuit imprimé, à partir des formules qui sont indiquées en figure 3.

Il faut, pour déterminer la position de l'aimant permanent 14, que celui-ci ne se trouve pas à l'aplomb de la droite passant par les deux cellules. La disposition de trois cellules 20 non alignées sur la plaquette 18 permet donc de déterminer la position de l'aimant 14 quelle que soit cette position par rapport à la plaquette 18.

La disposition de quatre cellules 20 sur la plaquette 18, aux quatre coins de cette plaquette, améliore cette détection et permet de disposer d'une redondance sur la position détectée.

Comme on le voit bien en figure 2 où les lignes de champ magnétique de l'aimant sont représentées schématiquement par des flèches, tout déplacement de l'aimant 14 en rotation autour de l'axe 12 ou en translation le long de cet axe se traduit par une modification des angles que font ces lignes de champ avec les axes passant par les groupes de deux cellules 20 et donc par des modifications des signaux de sortie des cellules 20.

Dans un exemple de réalisation, les cellules à magnétorésistances 20 sont disposées aux quatre coins d'un carré de 25 mm de côté. L'aimant cylindrique 14 est polarisé le long de son axe et orienté sensiblement perpendiculairement à la plaquette 18 de circuit imprimé portant les cellules qui se trouve à environ 15 mm de l'extrémité de l'aimant. Cette disposition permet d'avoir un champ magnétique symétrique dans le plan des magnétorésistances. L'aimant est du type néodyme-fer-bore, ses dimensions en diamètre et en hauteur sont de l'ordre de 8 à 9 mm, et son induction rémanente est de 1,4T environ. Les magnétorésistances des cellules 20 sont alors saturées par une induction parallèle de l'ordre de 8mT. La précision de la détermination de la position angulaire et axiale de l'aimant permanent 14 est inférieure à 1,5%.

On a représenté schématiquement une variante de réalisation de l'invention en figure 4, dans laquelle le doigt de passage 10 est équipé de deux aimants permanents 14 polarisés axialement et orientés perpendiculairement l'un à l'autre, ces deux aimants 14 se déplaçant devant deux plaquettes 18 de circuit imprimé disposées perpendiculairement l'une à l'autre et portant des cellules 20 à magnétorésistances.

La disposition des plaquettes 18 et des cellules 20 par rapport aux aimants permanents 14 et aux trajectoires parcourues par ces aimants lors de la rotation et de la translation du doigt de passage sont telles que chaque aimant 14 se déplace devant une ligne de cellules 20 portées par une plaquette 18.

Pour éviter tout problème de diaphonie entre les cellules et les aimants, c'est-à-dire pour éviter qu'un aimant puisse influencer magnétiquement les cellules 20 qui sont associées à la trajectoire de l'autre aimant, les deux aimants sont séparés l'un de l'autre par un blindage magnétique formé de deux plaques 24 disposées en croix, les deux aimants se trouvant dans deux quadrants opposés de la croix formée par ces deux plaques et chaque plaque se trouvant entre un aimant permanent 14 et les cellules 20 associées à l'autre aimant permanent 14.

La détection en continu de la position du doigt de passage 10 permet de détecter en continu le rapport de transmission qui est engagé ou sélectionné dans la boîte de vitesses et d'utiliser cette information à des fins de réduction de la consommation en carburant du véhicule automobile et de l'émission dans l'atmosphère de composés polluants (notamment du dioxyde de carbone et des oxydes d'azote) ainsi que dans des dispositifs du type « stop and go » qui arrêtent automatiquement le moteur du véhicule lorsque le véhicule est à l'arrêt et qui redémarrent automatiquement le moteur lorsque le conducteur, par exemple, appuie sur la pédale d'accélérateur ou relâche la pédale de frein.

L'invention est également applicable à la détection en continu de la position d'un levier de changement de vitesse.

## Revendications

1. Système de changement de rapport de transmission pour véhicule automobile comportant un dispositif de détection en continu de la position linéaire et angulaire d'un élément mobile dudit système, **caractérisé en ce que** ledit dispositif comprend au moins un aimant permanent (14) monté sur l'élément mobile et au moins un circuit imprimé (18) portant au moins trois cellules (20) à magnétorésistances détectant uniquement les directions des lignes de champ magnétique dudit aimant permanent, le circuit imprimé (18) étant monté sur un support fixe en regard de la trajectoire parcourue par l'aimant permanent lors du déplacement de l'élément mobile (10) en translation et en rotation pour un changement de rapport de transmission, les sorties des cellules (20) à magnétorésistances étant reliées à un circuit de traitement (22) pour déterminer par triangulation la position de l'élément mobile à partir des directions des lignes de champ magnétique détectées par les cellules.

2. Dispositif selon la revendication 1, **caractérisé en ce que** les cellules (20) sont montées sur un même circuit imprimé (18).

3. Dispositif selon la revendication 2 ou 3, **caractérisé en ce que** le circuit imprimé (18) porte au moins quatre cellules (20) à magnétorésistances, disposées aux quatre coins d'un carré ou d'un rectangle.

4. Dispositif selon l'une des revendications précédentes, **caractérisé en ce que** l'aimant permanent (14) est un élément cylindrique polarisé axialement et dont l'axe est sensiblement perpendiculaire au circuit imprimé (18) portant les cellules (20) à magnétorésistances.

5. Dispositif selon l'une des revendications précédentes, **caractérisé en ce que** le débattement angulaire de l'aimant 14 est d'environ 25 deg, et sa course en translation est d'environ 25mm.

6. Dispositif selon la revendication 1, **caractérisé en ce qu'**il comprend deux aimants (14) séparés l'un de l'autre par un blindage magnétique (24) et dont les axes magnétiques sont sensiblement perpendiculaires, et deux circuits imprimés (18) perpendiculaires portant des cellules (20) à magnétorésistances qui sont réparties le long des trajectoires parcourues par les deux aimants quand l'élément mobile (10) est déplacé en translation et en rotation.

7. Dispositif selon la revendication 6, **caractérisé en ce que** le blindage magnétique (24) séparant les deux aimants (14) s'étend entre chaque aimant et les cellules (20) de détection de la position de l'autre aimant (14).

8. Dispositif selon l'une des revendications précédentes, **caractérisé en ce que** le circuit de traitement (22) auquel sont reliées les sorties des cellules (20) est monté sur le circuit imprimé ou l'un des circuits imprimés portant les cellules (20).

9. Dispositif selon l'une des revendications précédentes, **caractérisé en ce que** l'élément mobile (10) portant le ou les aimants permanents (14) est un doigt de passage monté dans un module de sortie d'une boîte de vitesses.

## Patentansprüche

1. System für den Wechsel des Übersetzungsverhältnisse eines Kraftfahrzeuges, bestehend aus einer kontinuierlichen Vorrichtung zur Detektion der Linear- und Winkelposition eines beweglichen Elements besagten Systems, **dadurch gekennzeichnet, dass** besagte Vorrichtung mindestens einen Dauermagneten (14) umfasst, der auf das bewegliche Element montiert ist, und mindestens eine Leiterplatte (18) mit mindestens drei magnetoresistiven Zellen (20), die nur die Richtungen der magnetischen Feldlinien besagten Dauermagnets erkennen, wobei die Leiterplatte (18) auf einer feststehenden Halterung befestigt ist, die sich gegenüber der Bahn befindet, die der Dauermagnet beim Verschieben des beweglichen Elements (10) translatorisch und rotierend durchläuft, um das Übersetzungsverhältnis zu ändern, wobei die Ausgänge der magnetoresistiven Zellen an eine Verarbeitungsschaltung angeschlossen sind, um mittels Triangulation die Position des beweglichen Elements ausgehend von den durch die Zellen detektierten Richtungen der Magnetfeldlinien zu ermitteln.

2. Vorrichtung nach Anspruch 1, **dadurch gekennzeichnet, dass** die Zellen (20) auf ein und dieselbe Leiterplatte (18) montiert sind.

3. Vorrichtung nach Anspruch 2, **dadurch gekennzeichnet dass** die Leiterplatte (18) mindestens vier magnetoresistive Zellen (20) aufweist, die an den vier Ecken eines Quadrates oder eines Rechtecks angeordnet sind.

4. Vorrichtung nach einem der vorhergehenden Ansprüche, **dadurch gekennzeichnet, dass** der Dauermagnet (14) ein zylindrisches, axial polarisiertes Element ist, dessen Achse im Wesentlichen senkrecht zur Leiterplatte (18) mit den magnetoresistiven Zellen (20) steht.

5. Vorrichtung nach einem der vorhergehenden Ansprüchen, **dadurch gekennzeichnet, dass** der Winkelausschlag des Magneten (14) bei ungefähr 25 Grad liegt und die translatorische Hubbewegung bei ungefähr 25 mm.

6. Vorrichtung nach Anspruch 1, **dadurch gekennzeichnet, dass** sie zwei Magneten (14) umfasst, die durch eine magnetische Abschirmung (24) voneinander getrennt sind, und deren magnetische Achsen im Wesentlichen senkrecht stehen, und zwei senkrecht stehende Leiterplatten (18) mit magnetoresistiven Zellen, die an den von den beiden Magneten durchlaufenen Bahnen angeordnet sind, wenn sich das bewegliche Element (10) translatorisch und rotierend verschiebt.

7. Vorrichtung nach Anspruch 6, **dadurch gekennzeichnet, dass** sich die magnetische Abschirmung (24) zwischen den beiden Magneten (14) von dem Zwischenraum der Magneten bis zu den Positionsdetektionszellen (20) des nächsten Magneten erstreckt (14).

8. Vorrichtung nach einem der vorhergehenden Ansprüche, **dadurch gekennzeichnet dass** die Verarbeitungsschaltung (22), mit dem die Ausgänge der Zellen (20) verbunden sind, auf die Leiterplatte oder eine der Leiterplatten mit den Zellen (20) montiert ist.

9. Vorrichtung nach einem der vorhergehenden Ansprüche, **dadurch gekennzeichnet dass** das bewegliche Element (210) mit dem oder den Dauermagneten (14) ein Gangschaltfinger ist, der in ein Austrittsmodul eines Getriebes montiert wird.

## Claims

1. System for changing a transmission ratio for a motor vehicle, comprising a device for continuously detecting the linear and angular positions of a moving element of said system **characterized in that** said device comprises at least one permanent magnet (14) mounted on the moving element, and at least one printed circuit (18) carrying at least three magnetoresistance cells (20) detecting only the directions of the magnetic field lines of said permanent magnet, the printed circuit (18) being mounted on a stationary support facing the path traveled by the permanent magnet during displacement of the moving element (10) in translation and in rotation in order to change a transmission ratio, the outputs of the magnetoresistance cells (20) being connected to a processor circuit (22) in order to determine the position of the moving element by triangulation from the directions of the magnetic field lines detected by the cells.

2. A device according to claim 1, **characterized in that** the cells (20) are mounted on a single printed circuit (18).

3. A device according to claim 2, **characterized in that** the printed circuit (18) carries at least four magnetoresistance cells (20), disposed at the four corners of a square or of a rectangle.

4. A device according to any preceding claim, **characterized in that** the permanent magnet (14) is a cylindrical element polarized axially, having its axis substantially perpendicular to the printed circuit (18) carrying the magnetoresistance cells (20).

5. A device according to any preceding claim, **characterized in that** the angular travel of the magnet (14) is about 25° and its stroke in translation is about 25 mm.

6. A device according to claim 1, **characterized in that** it comprises two magnets (14) separated from each other by magnetic shielding (24) and having magnetic axes that are substantially perpendicular, together with two perpendicular printed circuits (18) carrying the magnetoresistance cells (20) that are distributed along the paths traveled by the two magnets when the moving element (10) is displaced in rotation and/or in translation.

7. A device according to claim 6, **characterized in that** the magnetic shielding (24) separating the two magnets (14) extends between each magnet and the cells (20) for detecting the position of the other magnet (14).

8. A device according to any preceding claim, **characterized in that** the processor circuit (22) to which the outputs of the cells (20) are connected is itself mounted on the printed circuit or one of the printed circuits carrying the cells (20).

9. A device according to any preceding claim, **characterized in that** the moving element (10) carrying the permanent magnet(s) (14) is a gearchange finger mounted in an outlet module of a gearbox.
